(19) Europäisches Patentamt
European Patent Office
Office européen des brevets

(11) EP 2 838 266 A2

(12) EUROPEAN PATENT APPLICATION

(43) Date of publication:
18.02.2015 Bulletin 2015/08

(51) Int Cl.:
H04N 13/04 (2006.01)

(21) Application number: 14180691.9

(22) Date of filing: 12.08.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 12.08.2013 US 201313964930

(71) Applicants:
• Lighthouse Technologies Limited
Hong Kong (CN)

• Lighthouse Technologies (Huizhou) Ltd.
Huizhou, Guangdong 516003 (CN)

(72) Inventors:
• Kikkawa, Shinsaku
Kawasaki-shi, Kanagawa, 214-0001 (JP)
• Chan, Kui Lai Curie
Hong Kong (CN)

(74) Representative: Maiwald Patentanwalts GmbH
Engineering
Elisenhof
Elisenstrasse 3
80335 München (DE)

(54) **Three-dimensional television display**

(57) A three-dimensional television display including an LED screen having an array of light sources where the resolution of glass-less three-dimensional television display may be improved through the use of multiple LED array parallax, selection of the disposition of LED arrays in the multiple LED array parallax, a diagonal parallax barrier and lenticular lenses.

FIG. 2

**Description**

**CROSS-REFERENCE TO RELATED APPLICATION**

This application claims priority to and the benefit of U.S. Serial No. 13/964,930, filed August 12, 2013, which is incorporated herein by reference.

**TECHNICAL FIELD OF THE INVENTION**

The present invention relates to improvements in three dimensional LCD displays. More specifically, the resolution of glass-less three-dimensional television displays may be improved through the use of multiple LED array parallax, selection of the disposition of LED arrays in the multiple LED array parallax, a diagonal parallax barrier and lenticular lenses.

**BACKGROUND OF THE INVENTION**

Three-dimensional ("3D") television is a developing technology for the consumer display market. Generally speaking, 3D television conveys depth perception to a viewer by employing various display techniques such as stereoscopic display, multi-view display, 2D-plus-depth, or any other form of 3D display. The basic technical requirement to achieve a 3D display is to display offset images that are filtered separately to the left eye and right eye.

Conventionally, the primary technique to achieve a 3D display for a viewer is to require the viewer to wear eyeglasses to filter the separately offset images to each eye. Common 3D display technologies involving eyeglass filters or lenses include: (1) anaglyph 3D - with passive color filters; (2) polarized 3D system - with passive polarization filters; (3) active shutter 3D system - with active shutters; and (4) head-mounted display - with a separate display positioned in front of each eye, and lenses used primarily to relax eye focus.

From the point of view of the consumer, although the 3D glasses hardware for 3D display technology has developed significantly and also enables 3D images to be viewed by multiple viewers at the same time, this technology still suffers from a problem in which the viewers must wear special glasses to see the 3D images. As a result, multiple manufacturers have invested in the development of 3D display technology that does not require the viewer to wear special glasses. In fact, this 3D display technology has currently developed into the multiview display technology which enables multiple viewers to view the 3D images at the same time. Yet, even as this technology progresses, the current state of the art still has many drawbacks. For example, while conventional 3D LCD televisions have good resolution (e.g., 0.5 mm dot pitch) and provide a better 3D view by utilizing, for example, multiple parallax barriers, such designs are limited to a small number of viewers. Moreover, conventional 3D designs continue to present images in which significant Moire patterns are observed from viewers at varying viewing distances.

**BRIEF SUMMARY OF THE INVENTION**

In consideration of the above problems, in accordance with one aspect of the present invention, a three-dimensional television display is disclosed herein that includes an LED screen having an array of light sources that emit light, a lenticular lens positioned adjacent to the LED screen and designed to diagonally distribute the light emitted from each of the light sources in the array, and a parallax barrier adjacent to the lenticular lens and comprised of a plurality of slits that transmit the distributed light to a viewer of the three-dimensional display device.

In another aspect of the present invention, the display device further comprises a polycarbonate board positioned between the LED screen and the lenticular lens.

In another aspect of the present invention, the parallax barrier of the display device is positioned a distance A from the lenticular lens and the distance A is substantially equal to a viewing distance of the viewer divided by 15.

In another aspect of the present invention, the lenticular lens comprises a plurality of lenticules each having a center axis that is offset between 0° and 90° from the horizontal plane of the display screen.

In another aspect of the present invention, each of the plurality of diagonally extending lenticules of the lenticular lens is optically cylindrically converging.

In another aspect of the present invention, the lenticular lens of the display device has a thickness that is dependent on a pixel pitch of the light sources.

In another aspect of the present invention, the lenticular lens is positioned approximately 6.0 millimeters from the display screen.

In another aspect of the present invention, the lenticular lens has a thickness of 0.26 millimeters.

In another aspect of the present invention, the light sources are light emitted diodes.

In another aspect of the present invention, the three-dimensional television display further comprising a parallax array having light elements with a horizontal width, the light elements disposed in groups of for arrayed two horizontal and two vertical; and the slits of the barrier having a horizontal width equal to approximately one half the horizontal width of the light elements.

In another aspect of the present invention, a parallax array has light elements with a horizontal width, the light elements disposed in groups of for arrayed two horizontal and two vertical where the slits of the barrier having a horizontal width equal to approximately one half the horizontal width of the light elements.

In another aspect of the present invention, the plurality of slits of the parallax barrier extend in a diagonal direction.

In another aspect of the present invention, a method of generating a three-dimensional image from the perspective of a viewer comprising emitting light from a display screen having a flat panel array of light sources; distributing light through a plurality of lenticular lenses in oblong patterns, with the lenticular lenses disposed adjacent to the display screen and having a center axis that is offset between 0° and 90° from a horizontal plane of the display screen; and emitting select portions of the distributed light through a plurality of slits in a parallax barrier to a viewer of the three-dimensional display device.

In another aspect of the present invention, the parallax barrier is positioned a distance A from the lenticular lens and the distance A is substantially equal to a viewing distance of the viewer divided by 15.

In another aspect of the present invention, the plurality of slits of the parallax barrier extend in a diagonal direction.

In another aspect of the present invention, where a size of the plurality of slits is approximately equal to (LI * P)/L2, where L1 is the distance from the viewer to the parallax barrier, P is the pitch of the light sources and L2 is the distance from the viewer to the display screen.

In another aspect of the present invention, a display screen having an array of light emitting diodes configured as a four parallax array with the light elements grouped two horizontal and two vertical; and a parallax barrier offset from the display screen by a distance determined by a reduction ratio and having a plurality of slits to transmit the distributed light to a viewer of the three-dimensional display device.

In another aspect of the present invention, the two horizontal and two vertical light elements are offset in a zigzag alignment and the plurality of slits are diagonal with respect to the horizontal and vertical light elements.

In another aspect of the present invention, the three-dimensional display device further comprising lenticular lenses adjacent to the display screen for distributing light emitted from each of the light emitting diodes in oblong patterns, respectively, each having a center axis that is offset between 0° and 90° from a horizontal plane of the display screen.

## BRIEF DESCRIPTION OF THE DRAWINGS

The figures are for illustration purposes only and are not necessarily drawn to scale. The invention itself, however, may best be understood by reference to the detailed description which follows when taken in conjunction with the accompanying drawings in which:

FIG. 1 illustrates a side view of an 3D display device according to an exemplary embodiment of the present invention;

FIG. 2 illustrates a light distribution scheme according to an exemplary embodiment of the present invention;

FIG. 3 illustrate an exemplary image of the light distribution according to an exemplary embodiment of the present invention;

FIG. 4 illustrates a close up view of a parallax barrier of the 3D display device in accordance with an embodiment of the present invention;

FIGS. 5A through C illustrates a conventional four parallax array and barrier using four horizontal LED arrays per block;

FIGS. 6A through C shows a four parallax array and barrier of the present invention using horizontal and vertical LED arrays per block;

FIGS. 7 illustrates the parallax distribution for the four parallax array of the present invention;

FIGS. 8A through C shows a four parallax array and barrier of the present invention using a diagonal barrier;

FIGS. 9A through C shows a four parallax array and barrier of the present invention using displaced horizontal and vertical LED arrays per block; and

FIG. 10 shows the parallax distribution for the four parallax arrays of the present invention.

## DETAILED DESCRIPTION OF THE INVENTION

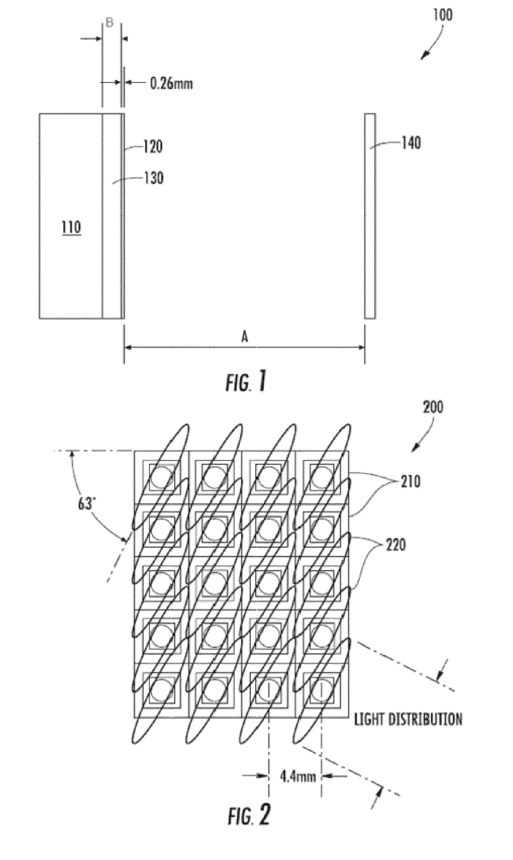

FIG. 1 illustrates a side view of 3D display device 100 according to an exemplary embodiment of the present invention. As can be seen in FIG. 1, the 3D display device 100 comprises an LED display 110, a lenticular sheet 120, a polycarbonate board 130 and a parallax barrier 140. In the exemplary embodiment, the LED display 110 itself is a conventional LED screen having a plurality of LED arrays with LED chips behind the television screen. The LED chips in one embodiment are surface mount RGB LEDS. One or more of the LEDs from the LED arrays are driven together to form pixels (e.g., a cluster of red, green, and blue diodes are driven together to form a full-color pixel). As will be discussed in more detail below, the lenticular sheet 120 and the parallax barrier 140 are provided to filter and separate each of the pixels to create the effect of a 3D image for a viewer.

As further shown, the 3D display device 100 further comprises a lenticular sheet 120 that is positioned adjacent to the LED display 110. In the exemplary embodiment, the lenticular sheet 120 is preferably 0.26 millimeters thick and has an array of magnifying lenses provided to filter the image being emitted from the pixels of the LED display 110. The magnifying lenses of the lenticular sheet 120 are a plurality of diagonally extending lenticules, preferably, each of which is optically cylindrically converging. In the exemplary embodiment, the lenticules extend diagonally with respect to the X and Y axes of the LED display 110 and may be formed, for example, as planoconvex cylindrical lenses, as graded refractive index (GRIN) cylindrical lenses or the like. A larger value of lines per inch for the lenticules produces a finer effect. In one embodiment, the lenticules in the lenticular sheet have 150 lines per inch or a .17 mm pitch. The magnifying lenses may be other types of wide-angle lenses that produce a similar effect to that of the lenticules. As will be discussed with reference to FIG. 2 in detail below, each lenticule is positioned adjacent to one or a plurality of pixels to distribute the light emitted from the light emitting elements (*i.e.,* the LEDs) of the LED display 110.

Furthermore, as shown in FIG. 1, the lenticular sheet 120 is set apart slightly from the LED display 110 to create an ideal light distribution effect. Preferably, this distance is created by the positioning of a polycarbonate board 130 between the LED display 110 and the lenticular sheet 120. The polycarbonate board 130 can be manufactured using any appropriate material that is transparent, heat-resistant, and preferably lightweight. Polycarbonate is preferably since it has a low expansion coefficient with respect to the heat from the LEDs and has high light transmission. However, other suitable materials may be used. By using a polycarbonate board 130 between the LED display 110 and the lenticular sheet 120, it can be ensured that the distance between the LED display 110 and the lenticular sheet 120 is substantially even and uniform. Preferably, the polycarbonate board 130 is affixed to both the LED display 110 and the lenticular sheet 120 by an appropriate adhesive or the like, although it is contemplated that the polycarbonate board 130 can be positioned a certain distance from the LED display 110. In the exemplary embodiment, the distance between the LED display 110 and the lenticular sheet 120 is approximately the same as the thickness of polycarbonate board 130, designated B in FIG. 1. In one embodiment, the thickness B of the polycarbonate board is approximately 6mm. However, the amount of diffusion through lenticular sheet 120 depends on factors such as the size, shape and intensity of the LEDs, the type of polycarbonate and other specifications. Thus, the thickness B may vary from application to application.

In addition, a parallax barrier 140 is provided at a pixel barrier separation distance A from the lenticular sheet 140. The parallax barrier 140 is configured to separate the left and right eye images generated by the pixels to create the 3D effect to the viewer. More particularly, the parallax barrier comprises series of precision slits that allow the viewer to see only left image pixels from the position of their left eye and right image pixels from the position of their right eye. Although not shown in Figure 1, it is contemplated that the LED display 110, the lenticular sheet 120, the polycarbonate board 130 and the parallax barrier 140 are all collectively mounted on a television frame or the like to form the 3D display device 100. Moreover, the remaining components necessary for the 3D television to function and which are well known to those skilled in the art will not be described herein so as to not unnecessarily obscure the aspects of the invention.

It is understood to one skilled in the art that a Moire pattern perceived by the viewer of a conventional 3D television will vary greatly depending on the viewer's viewing distance to the television. From a far viewing distance, the barrier apertures appear larger than the pixels of the display. Thus, if the pixel pitch and the barrier pitch were the same, the misalignment due to perceived differences in size results in misalignment or pseudo stereoscopy, and viewing is not as satisfactory. The viewing is improved when the barrier pitch is set slightly narrower to make the perceived size of the barrier apertures the same as the appearance of the pixels in the display. If the distance between the display and the barrier is too small or narrow, there is not enough of a 3-dimensional effect. To achieve a satisfactory effect, according to an exemplary embodiment as shown in FIG. 1, the parallax barrier 140 of the 3D display device 100 is positioned a distance A from the lenticular sheet 120, where the distance A is calculated by the following equation:

$$A = \text{viewing distance}/15$$

Accordingly, the expected viewing distance is preset during manufacture and the pixel barrier separation distance A is defined according to the foregoing equation.

FIG. 2 illustrates a light distribution scheme according to an exemplary embodiment of the present invention. As shown, FIG. 2 illustrates a plurality of LED chips 210 that are provided as part of the screen of the LED display device 100 discussed above. As discussed above, the lenticular sheet 120 is positioned adjacent to the LED display 110 to provide a diagonal light distribution 220 for each pixel of each respective LED chip 210. In other words, the lenticular sheet 120 distributes the image on a per pixel basis and provides a light distribution pattern that is diagonally distributed with respect to the X and Y axes of the LED display 110. FIG. 2 illustrates the light distribution pattern as an oval-shaped pattern, although it is contemplated that the light distribution pattern can be any oblong-shaped pattern (i.e., its width is greater than its height or vice versa). Further, the center axis, which is defined as the axis of the wider dimensions of the light distribution pattern, is offset between 0° and 90° with respect to the horizontal plane of the display screen, *i.e.*, it is diagonally distributed. For example, as shown in FIG. 2, the center axis of the light distribution pattern is, preferably, offset to be 63° from the horizontal plane of the LED chips 210 as shown in FIG. 2. When the light distribution pattern is vertical, a moire pattern may be produced and the range for the viewing angle is reduced. When the light distribution pattern is horizontal, the viewing angle is increased but the boundary line between the pixels appears more clearly. Thus, a diagonal light distribution pattern solves some of the problems seen in both the horizontal or vertical light distribution patterns. In addition, the diagonal light distribution pattern also reduces the flicker caused by the interference between the two images produced by the LED display in generating the 3-dimensional display when viewed from a side angle. The 63° offset from the horizontal is a calculated value based on a trigonometric function. The angle between the pixel horizontal line and the diagonal light distribution pattern is calculated as the arc tangent of the length of the opposite side (twice the pixel width) divided by the length of the adjacent side (one pixel width). While the 63° offset is preferred in one embodiment, the angle offset from the horizontal plane may vary from this.

The diagonal light distribution 220 is provided by a plurality of diagonally extending lenticules of the lenticular sheet 120. The per pixel light distribution design greatly improves image quality by broadening out the light distribution pattern and effectively reducing the unlighted area between the pixels to achieve a smooth image. As discussed above, the design of the lenticular sheet 120 magnifies the light in an oblong-shaped light distribution pattern, such that the light from one LED chip 120 is effectively distributed to the middle of the two LED chips that are directly above and below it. As further shown, the pixel pitch of the exemplary embodiment is 4.4 mm. The approximately 4 mm pitch is suitable for 3D LED displays that have a reasonable resolution for unaided viewing. However, it should be appreciated that the exemplary embodiment maintains the same light distribution angle for any pixel pitch used for the LED display 110.

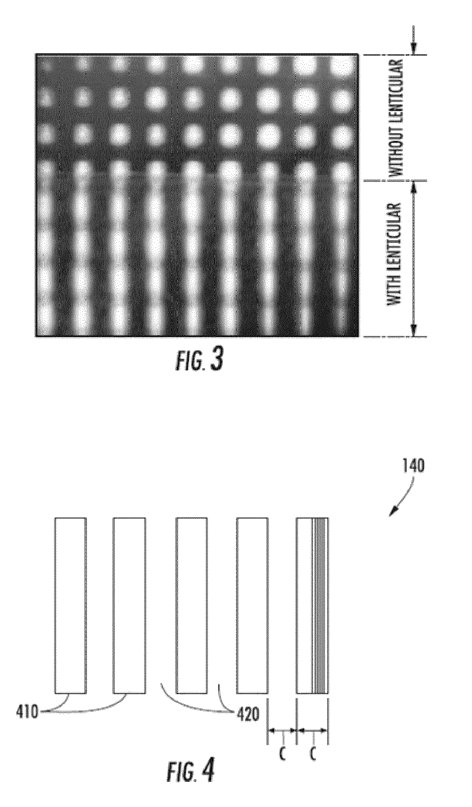

FIG. 3 illustrates an exemplary image of the light distribution according to an exemplary embodiment of the present invention. As shown, FIG. 3 illustrates a reference photograph in which the light emitted from the pixels distributed using a lenticular sheet/lens (as shown in the bottom half of the image), and without the lenticular sheet/lens (as shown in the top half of the image). It should be appreciated that the exemplary image of FIG. 3 illustrates a vertical light distribution using the lenticular sheet/lens However, as noted above the exemplary embodiment contemplates a diagonal light distribution, preferably at 63° from the horizontal plane. Thus, the exemplary image of FIG. 3 is being provided primarily to illustrate how the light deliverer from one LED chip 120 extends to the middle of the two LED chips that are directly above and below it as discussed above.

FIG. 4 illustrates a close up view of a parallax barrier 140 of the LED display device 100 in accordance with an embodiment of the present invention. As discussed above, the parallax barrier 140 has a series of precision slits that allow the viewer to see only left image pixels from the position of their left eye and right image pixels from the position of the right eye. As shown in FIG. 4, the parallax barrier 140 includes the barrier material 410 (e.g., an opaque plate) and a plurality of slits 420. In the exemplary embodiment, the plurality of slits 420 are vertical apertures (i.e., vertical slits from the perspective of the LED display 110). Alternatively, the plurality of slits can be provided in the horizontal direction, a diagonal direction or the like. Moreover, the slit width C is determined to create an effect that the barrier slit width and the LED pixel pitch are perceived to be the same to the viewer from the viewing distance. Because the parallax barrier 140 is physically positioned in front of the LED display 110, as discussed above, the slit width C is narrower than the pixel pitch. Preferably, in the exemplary embodiment, the aperture percent is 50% if the viewing distance is 5 meters. That is, the barrier slit width C will be 50% of the pixel pitch.

To calculate the barrier size, the reduction ratio (S) is first calculated, which is the distance from the viewer to the barrier (LI) divided by the distance from the viewer to the display (L2). The barrier size (C) may then be calculated as the reduction ratio (S) times the pitch size of the LEDs (P). As an example, if the viewing distance is 5 meters, then the distance between the display and barrier (A) is:

A = viewing distance/15
A = 5m/15
A = 0.33m

The reduction ratio (S) would be

S=L1/L2
=5m/5.33m
= 0.94m

The barrier size (C) would be:

C = S * P
C = 4.44 mm * 0.94
C = 4.2 mm

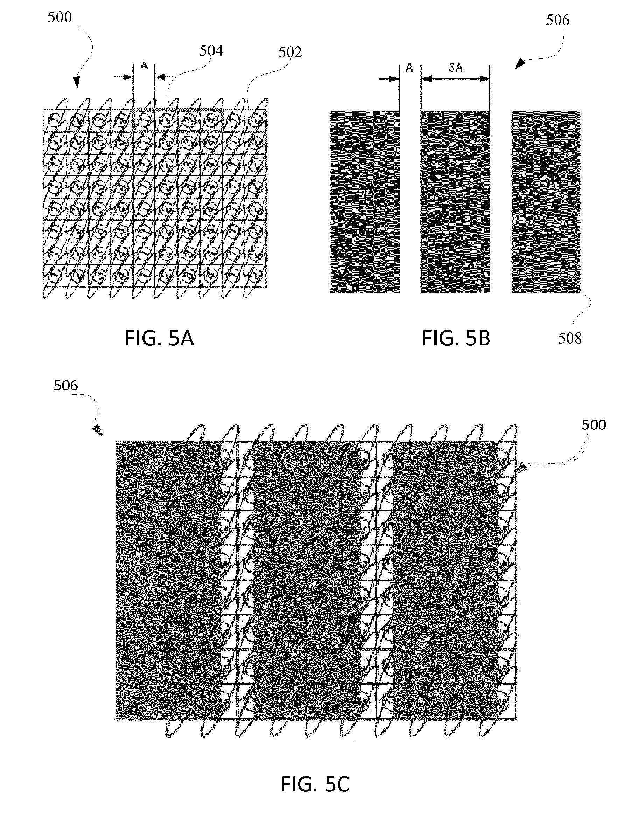

In another embodiment, multiple LED arrays may be used to represent a single pixel. Thus, a two parallax array has two LED arrays representing a single "pixel" of the image as seen through the parallax barrier. Likewise a four parallax array has four LED arrays representing a single "pixel" of the image as seen through the parallax barrier. As an example of this, four parallax array 500 is shown in FIG. 5A. Four parallax array 500 is comprised of a multitude of LED arrays 502, which are normally arranged in horizontal blocks of four, an example of which is block 504. The four LED arrays within block 504 are depicted by the numerals one through four, and are shown as repeating throughout the array. One LED array (a single pixel of the image) has a horizontal width A.

The corresponding barrier 506 for four parallax array 500 is shown in FIG. 5B. Barrier 506 is configured to block three out of the four LED arrays that comprise each block 504. Physical barrier portion 508 has a horizontal width equal to approximately 3A, and the space between each physical barrier portion 508 has a horizontal width approximately equal to A. For purposes of this discussion, the barrier size is being depicted as it is located on the pixel surface. However, when using an actual 3-D display, the size will be calculated based on the reduction ratio. The overlay of barrier 506 on top of four parallax array 500 is shown in FIG. 5C. In this instance, the transmission of light will be 25% since the emissions from only one LED array passes through barrier 506, while the emissions from the other three LED arrays are blocked by physical barrier portion 508. In this design, the horizontal resolution is lowered which results in the reduction of the image quality.

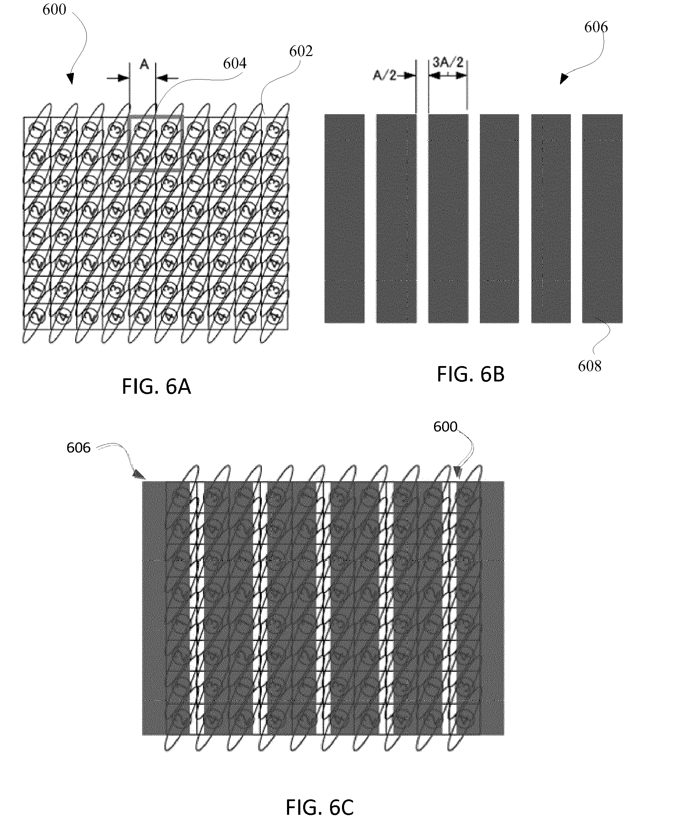

The horizontal resolution of a four parallax array may be improved by setting up the four parallax as two horizontal and two vertical blocks as shown in FIGS. 6A to 6C. In one embodiment, it is preferable to have less parallax vertically than horizontally. As shown in FIG. 6A, four parallax array 600 is comprised of LED arrays 602 that are first stacked horizontally and then vertically. Thus, as an example, block 604 has array one in the upper left quadrant, array two in the lower left quadrant, array three in the upper right quadrant and array four in the lower right quadrant. Again, each LED array 602 has a horizontal width A. Physical barrier 606 that corresponds to four parallax array 600 is shown in FIG. 6B. Physical barrier 608 has a horizontal width equal to 3A/2, while the space between physical barriers 608 has a horizontal width equal to A/2. As apparent, the barrier can be made with half the pitch of LED array 602, resulting in a doubling of the horizontal resolution. An overlay of barrier 606 on top of four parallax array 600 is shown in FIG. 6C.

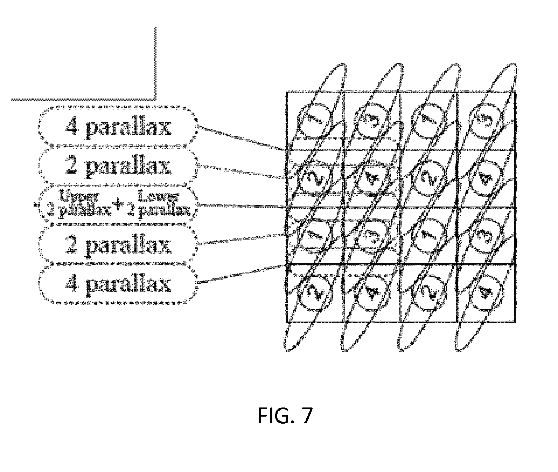

In using this method, four parallax and two parallax will be mixed as shown in FIG. 7. Moving in the vertical direction, the parallax will go from four parallax to two parallax, reverse where there is a combination of two from the upper parallax and two from the lower parallax and then go to two parallax back and four parallax. This configuration improves the horizontal resolution but the vertical resolution gets reduced in half because of the disposition of each of LED array 602 both vertically and horizontally. However, this is acceptable because a reduction in the vertical resolution affects the image quality less than a reduction in the horizontal resolution.

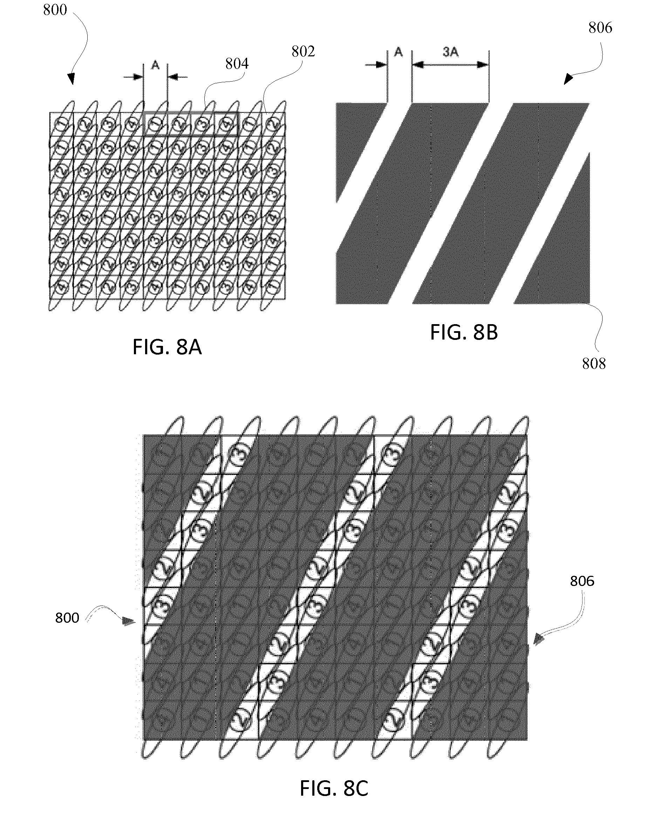

The image quality may be improved by using a diagonal barrier. As shown in FIG. 8A, four parallax array 800 is comprised of LED arrays 802 arranged in horizontal groups of four as shown by block 804, and containing the numbers one through four. Again, each LED array 802 has a horizontal width A. Diagonal barrier 806 is shown in FIG. 8B. Physical barrier 808 has a width equal to approximately 3A, and the distance between each physical barrier 808 has a width approximately equal to A. The superposition of diagonal barrier 806 over four parallax array 800 is shown in FIG. 8C. Diagonal barrier 806 is made to block three out of four of LED arrays 802 that form block 804. Thus, the transmission of light from four parallax array 800 will be approximately 25%. This has a significant effect on the brightness of four parallax array 800 and results in a reduction in the horizontal resolution.

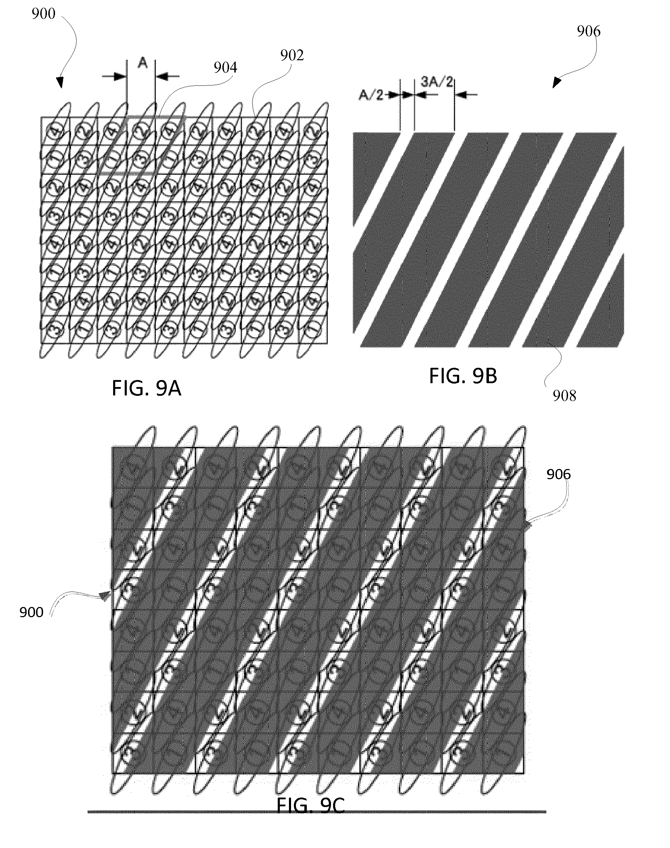

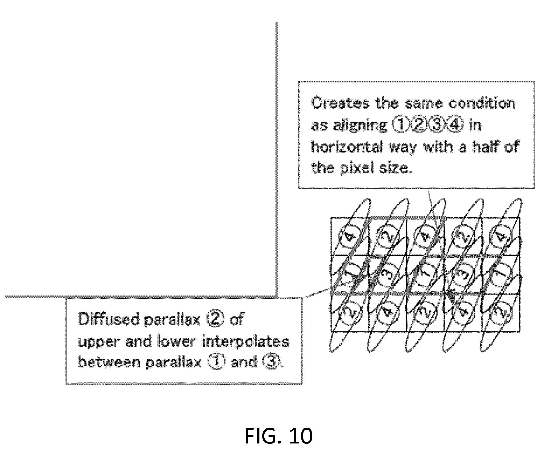

As an improvement in the use of a diagonal barrier, the four parallax to be arranged as two horizontal and two vertical LED arrays that are disposed in a zigzag alignment as shown in FIGS. 9A through 9C. Four parallax array 900 is comprised of LED arrays 902 arranged in groups of four as shown by block 904. The first LED array starts the block, with the second LED array being above and shifted over one position. The third LED is below the second LED, and the fourth LED is one position over and one position up, as shown in FIG. 9A. Diagonal barrier 906 is shown in FIG. 9B. Physical barrier 908 has a width equal to approximately 3A/2, and the distance between each physical barrier 908 has a width approximately equal to A/2. By aligning the parallax in a diagonal zigzag arrangement combined with the defusing by the lenticular, the upper and lower rows interpolate between parallax in the horizontal direction and resolution is doubled artificially so that the barrier can be made with half the pitch of the pixel array size. Also, the reversed parallax that occurs with the vertical barrier does not happen with this method so the image quality is improved. A demonstration of this is shown in FIG. 10.

Although specific embodiments have been illustrated and described herein, it will be appreciated by those of ordinary skill in the art that a variety of alternate and/or equivalent implementations may be substituted for the specific embodiments shown and described without departing from the scope of the present invention. The disclosure herein is intended to cover any adaptations or variations of the specific embodiments discussed herein. Therefore, it is intended that this invention be limited only by the claims and the equivalents thereof.

**Claims**

1. A three-dimensional display device comprising:

   a display screen having an array of light sources configured to emit light;
   a lenticular lens adjacent to the display screen and configured to distribute the light emitted from each of the light sources in oblong patterns, respectively, each having a center axis that is offset between 0° and 90° from a horizontal plane of the display screen; and
   a parallax barrier adjacent to the lenticular lens and having a plurality of slits each configured to transmit the distributed light to a viewer of the three-dimensional display device.

**2.** The display device of claim 1, further comprising a polycarbonate board positioned between the display screen and the lenticular lens.

**3.** The display device of claim 1 or 2, wherein the parallax barrier is positioned a distance A from the lenticular lens and the distance A is substantially equal to a viewing distance of the viewer divided by 15.

**4.** The display device of claim 1, 2 or 3, wherein the lenticular lens comprises a plurality of lenticules each having a center axis that is offset between 0° and 90° from the horizontal plane of the display screen.

**5.** The display device of claim 4, wherein each of the plurality of lenticules is optically cylindrically converging.

**6.** The display device of one of the claims 1 to 5, wherein a thickness of the lenticular lens is dependent on a pixel pitch of the light sources.

**7.** The display device of one of the claims 1 to 6, wherein the lenticular lens is positioned approximately 6.0 millimeters from the display screen.

**8.** The display device of one of the claims 1 to 7, wherein the lenticular lens has a thickness of 0.26 millimeters.

**9.** The display device of one of the claims 1 to 8, wherein the light sources are light emitted diodes.

**10.** The display device of one of the claims 1 to 9, further comprising:

a parallax array having light elements with a horizontal width, the light elements disposed in groups of for arrayed two horizontal and two vertical; and
the slits of the barrier having a horizontal width equal to approximately one half the horizontal width of the light elements.

**11.** The display device of one of the claims 1 to 10, further comprising:

a parallax array having light elements with a horizontal width, the light elements disposed in groups of four arrayed offset vertically and horizontally; and
the slits of the barrier having a horizontal width equal to approximately one half the horizontal width of the light elements.

**12.** The display device of claims 10 or 11, wherein the plurality of slits of the parallax barrier extend in a diagonal direction.

**13.** A method of generating a three-dimensional image from the perspective of a viewer comprising:

emitting light from a display screen having a flat panel array of light sources;
distributing light through a plurality of lenticular lenses in oblong patterns, with the lenticular lenses disposed adjacent to the display screen and having a center axis that is offset between 0° and 90° from a horizontal plane of the display screen; and
emitting select portions of the distributed light through a plurality of slits in a parallax barrier to a viewer of the three-dimensional display device.

**14.** The method of claim 13, wherein the parallax barrier is positioned a distance A from the lenticular lens and the distance A is substantially equal to a viewing distance of the viewer divided by 15.

**15.** The method of claim 13 or 14, wherein the plurality of slits of the parallax barrier extend in a diagonal direction.

**16.** The method of claim 13, 14 or 15, where a size of the plurality of slits is approximately equal to (L1 * P)/L2, where L1 is the distance from the viewer to the parallax barrier, P is the pitch of the light sources and L2 is the distance from the viewer to the display screen.

**17.** A three-dimensional display device comprising:

a display screen having an array of light emitting diodes configured as a four parallax array with the light elements grouped two horizontal and two vertical; and
a parallax barrier offset from the display screen by a distance determined by a reduction ratio and having a plurality of slits to transmit the distributed light to a viewer of the three-dimensional display device.

**18.** The three-dimensional display device of claim 17, wherein the two horizontal and two vertical light elements are offset in a zigzag alignment and the plurality of slits are diagonal with respect to the horizontal and vertical light elements.

**19.** The three-dimensional display device of claim 18, further comprising:

lenticular lenses adjacent to the display screen for distributing light emitted from each of the light emitting diodes in oblong patterns, respectively, each having a center axis that is offset between 0° and 90° from a horizontal plane of the display screen.

FIG. 1

FIG. 2

FIG. 3

FIG. 4

FIG. 5A

FIG. 5B

FIG. 5C

FIG. 6A

FIG. 6B

FIG. 6C

4 parallax

2 parallax

Upper
2 parallax + Lower
2 parallax

2 parallax

4 parallax

FIG. 7

FIG. 8A

FIG. 8B

FIG. 8C

FIG. 9A

FIG. 9B

FIG. 9C

Creates the same condition as aligning ①②③④ in horizontal way with a half of the pixel size.

Diffused parallax ② of upper and lower interpolates between parallax ① and ③.

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13964930 B